# DEMANDE DE BREVET EUROPEEN

(11) **EP 0 738 460 A1**
(43) Date de publication de la demande: **23.10.1996**
(21) Numéro de dépôt: 96400773.6
(22) Date de dépôt: 10.04.1996
(51) Int. Cl.: A01C 5/04, A01C 11/00

(54) **Machine à planter pour plantes potagères et analogues**

(30) Priorité: 10.04.1995 ES 9500975
(71) Demandeur: Aguas Ardanaz, Jose Javier, 31315 Traibuenas (Navarra) (ES)
(72) Inventeur: Aguas Ardanaz, Jose Javier, 31315 Traibuenas (Navarra) (ES)
(74) Mandataire: Joly, Jean-Jacques

(57) **Abrégé**

Machine à planter pour plantes potagères et analogues, formée d'un châssis ou bâti structural (1) muni de roues (2) d'appui pour le déplacement. Sur le bâti (1), sont agencés une série de sièges (4) au droit desquels, sur le bord frontal avant, sont disposés des éléments respectifs (5) formés d'un cylindre pneumatique placé verticalement, muni d'un plantoir (7) à l'extrémité de la tige respective (6) en saillie dirigée vers le bas, lesdits éléments (5) étant en liaison avec un moyen pneumatique d'actionnement des cylindres tandis que les plantoirs (7) sont en liaison avec un moyen de projection d'eau à travers eux.

## Description

La plantation de plantes potagères ou analogues, à base de plants déjà démarrés obtenus dans des semis, exige essentiellement deux opérations fondamentales dont l'une consiste à introduire les plants dans la terre, selon la distribution désirée, tandis que l'autre opération consiste dans l'arrosage d'humidification nécessaire pour que les plants prennent.

Ces opérations sont très délicates et laborieuses, et elles s'effectuent jusqu'à ce jour dans un mode entièrement manuel, car les essais de mécanisation déjà tentés n'ont pas donné de résultats satisfaisants.

L'opération consistant à introduire les plants dans la terre exige la formation d'un trou en chaque point concret, ce qui se réalise habituellement par perforation avec un objet quelconque pour introduire ensuite le plant dans le trou, tâche qui, dans les grandes plantations, exige évidemment beaucoup de main d'oeuvre, en entraînant une répercussion considérable sur le prix de revient de la production.

L'arrosage pour l'humidification peut de son côté s'effectuer de différentes façons comme, par exemple, à l'aide de raies, par aspersion, sous recouvrement, etc. mais, pour le cas concret du premier arrosage de la plantation précité, celui qui est réellement efficace, pour éviter que les plants soient inondés et arrachés, c'est l'arrosage unitaire par plant, ce qui est quasi impraticable dans les grandes plantations en raison de son coût élevé.

Selon la présente invention, en prenant en compte l'ensemble de ce problème, on propose une machine destinée à réaliser ce travail de plantation précité avec laquelle on résout de façon rentable et pratique le problème du grand emploi de main d'oeuvre manuelle, en réduisant à un minimum la nécessité d'intervention d'ouvriers, cette intervention se faisant en tout cas d'une façon commode, en permettant ainsi d'atteindre un rendement d'exécution très élevé.

Cette machine objet de l'invention est essentiellement constituée par un châssis ou bâti structural qui peut être équipé de moyens moteurs ou de moyens d'attelage pour pouvoir être entraîné à l'aide d'un tracteur, ce châssis étant équipé de roues d'appui qui peuvent être positionnées pour le déplacement et pour l'exécution du travail, bâti sur lequel sont agencés une sérié de sièges destinés aux ouvriers respectifs tandis que, sur le bord frontal avant sont agencés, en position corrélative devant les sièges précités des éléments perforateurs formés par des cylindres pneumatiques dont la tige est dirigée verticalement vers le bas, en présentant un plantoir à son extrémité.

Ces éléments perforateurs sont en liaison avec un système pneumatique d'actionnement des cylindres, tandis que les plantoirs correspondants, qui sont ajourés, sont en liaison avec un système hydraulique respectif, l'ensemble étant équipé de moyens activateurs des systèmes précités, dont l'actionnement est prévu en fonction du déplacement de la machine pendant le travail.

On obtient de cette façon un ensemble d'une grande simplicité et d'un fonctionnement très simple, qui, au moyen des éléments perforateurs, est capable de réaliser automatiquement les trous nécessaires pour l'introduction des plants dans la terre, en combinant ladite action avec un arrosage individualisé dans chacun des trous, de manière que l'action de la main d'oeuvre a uniquement à effectuer la tâche d'introduire les plants dans les trous formés.

En outre, les ouvriers chargés d'effectuer cette tâche d'introduire les plants dans les trous correspondants l'exécutent en position assise, étant transportés par la machine pendant son déplacement, ce qui fait que le déroulement du travail se réalise commodément, l'effort nécessaire étant réellement minime, de sorte qu'on peut atteindre une grande productivité.

La machine peut en outre être adaptée pour un nombre variable de rangées de plantation, en faisant travailler dans chaque cas les perforateurs voulus, lesquels peuvent de même être prévus avec un écartement réglable, pour déterminer la largeur d'écartement qui convient entre les rangées de la plantation.

D'autre part, les perforateurs mentionnés sont montés dans une disposition basculante, de sorte qu'on parvient à éviter que les trous formés dans la terre soient agrandis par l'avance de la machine pendant la perforation, ce à quoi contribue aussi l'action pratiquement instantanée par laquelle on réalise les trous.

La formation des trous pour l'inclusion des plants peut s'effectuer à son tour, soit directement sur la terre, doit à travers la feuille de matière plastique qui peut être disposée sur le site de la plantation, puisque les perforateurs permettent de perforer les feuilles de matière plastique sans la moindre difficulté.

Etant donné que l'humidification du trou se produit au moment de la perforation, on obtient que la plantation possède un pourcentage de réussite très élevé, en évitant que les plants se dessèchent, surtout dans les terrains recouverts de matière plastique où, pendant les jours chauds, si on n'arrose pas aussitôt (dans la demi-heure) après l'insertion des plants, ces derniers se dessèchent, en ruinant la plantation, ce qui ne se produit évidemment pas avec la machine proposée.

De cette façon, la machine objet de l'invention possède certainement des caractéristiques très avantageuses qui lui confèrent une existence propre et un caractère préférentiel pour le déroulement des opérations de plantation mentionnées auxquelles elle est destinée.

La figure 1 représente une vue en perspective schématique de la machine préconisée, conforme à une réalisation de cette machine qui a une capacité de quatre ouvriers planteurs.

Les figures 2, 3, 4 et 5 représentent sous forme schématique quatre positions successives de la séquence fonctionnelle de l'un des perforateurs de la machine avec lesquels on réalise la formation de trous dans la terre.

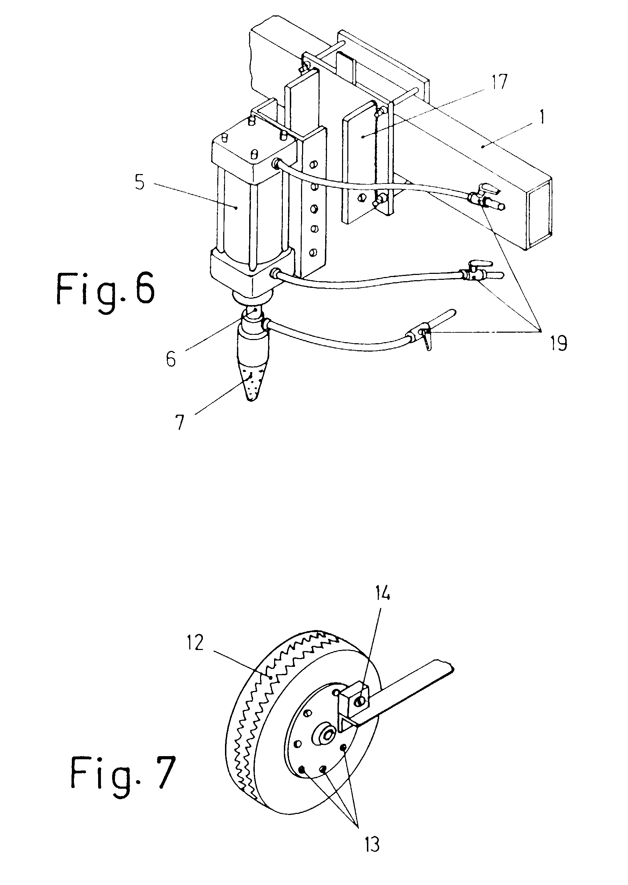

La figure 6 est un détail en perspective de la disposition de montage de l'un des perforateurs mentionnés de la machine.

La figure 7 est un détail en perspective du dispositif activateur du fonctionnement des systèmes pneumatique et hydraulique en fonction de l'avance de la machine.

La figure 8 est une vue de côté d'une réalisation de la machine qui a une capacité d'un grand nombre d'ouvriers, qui peut effectuer le transport et le travail dans des directions de déplacement perpendiculaires.

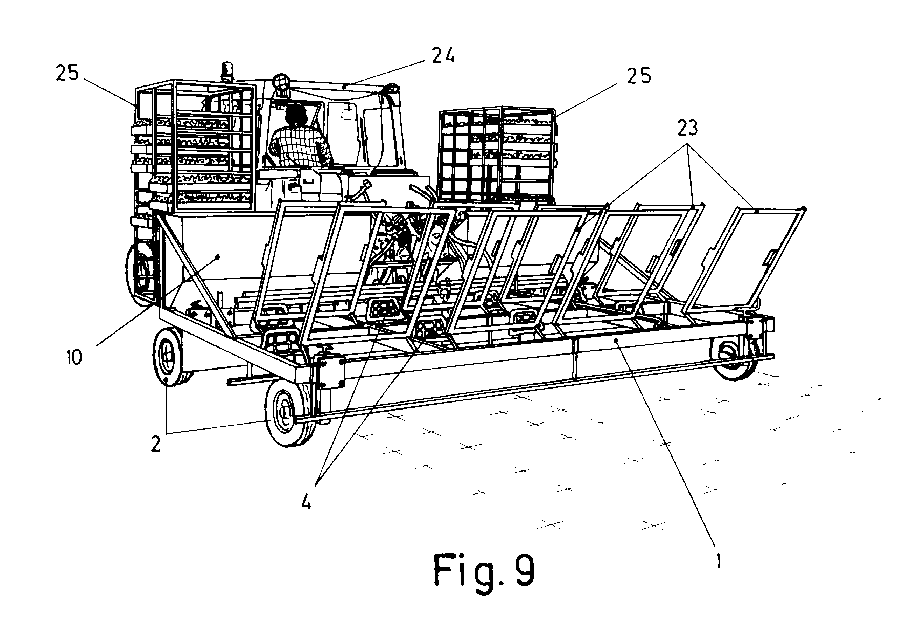

La figure 9 est une représentation en perspective vue de l'arrière de l'ensemble de la machine selon une forme déterminée de réalisation, accouplée par attelage à un tracteur d'entraînement.

### LISTE DES REFERENCES

1. Bâti structural
2. Roues de déplacement
3. Attelage d'entraînement
4. Sièges pour les ouvriers planteurs
5. Elément perforateur
6. Tiges saillantes
7. Plantoirs
8. Compresseur
9. Moto-pompe
10. Réservoir d'eau
11. Boîte des temporisateurs
12. Roue régulatrice
13. Points détectables
14. Elément détecteur
15. Terre
16. Trou pour la plantation
17. Support de montage
18. Elément élastique
19. Robinets
20. Compléments extrêmes
21. Timon d'attelage
22. Roues des compléments
23. Plateaux pour placer les caisses de plants
24. Tracteur d'entraînement
25. Cages supports de caisses

L'objet de l'invention se rapporte à une machine destinée à planter des plantes potagères ou analogues, du type de celles qui exigent la formation de trous dans la terre pour y introduire les plants déjà démarrés prélevés dans des semis, cette machine étant constituée par un châssis ou bâti structural (1) monté sur des roues de déplacement (2), la machine pouvant être équipée de moyens d'actionnement automoteur, ou pouvant posséder un attelage (3) pour l'accouplement de traction à un tracteur d'entraînement (24).

Sur le bâti (1) mentionné, sont disposés une série de sièges (4) tandis que, sur le bord frontal avant, sont agencés des éléments (5), situés respectivement devant les sièges (4) mentionnés ; ces éléments (5) étant constitués par des cylindres extensibles respectifs, qui sont prévus à actionnement pneumatique, bien que ceci ne soit pas limitatif.

Lesdits éléments (5) sont disposés en direction verticale, avec la tige correspondante (6) de leurs cylindres respectifs dirigée vers le bas, et comportant à son extrémité un plantoir (7) ; les cylindres étant reliés à un système pneumatique pouvant être actionné par un compresseur (8), tandis que les plantoirs (7) sont reliés à un système hydraulique qui comprend une moto-pompe (9) et un réservoir d'eau (10), lesdits plantoirs (7) étant munis d'ajours à travers lesquels la sortie d'eau peut être projetée. Le réservoir (10) peut de son côté être de capacité variable et, en fonction de ceci, il peut être agencé sur le châssis (1) de la machine dans une disposition quelconque ou encore être transporté de façon indépendante par le tracteur d'entraînement respectif (24).

Chaque groupe perforateur est équipé individuellement d'électrovannes respectives prévues dans le circuit d'air du cylindre (5) correspondant et dans le conduit d'eau menant au plantoir (7), les systèmes pneumatiques et hydrauliques étant fonctionnellement commandés par des temporisateurs de commande qui sont agencés dans une boîte (11), lesquels temporisateurs effectuent en quelques centièmes de seconde la régulation du temps d'ouverture des électrovannes d'air et d'eau, le volume d'eau qui est fourni à chaque fois pouvant être gradué entre des quantités déterminées, par exemple, entre 10 cm³ et 1000 cm³, sans que ceci ne soit limitatif.

Tout l'ensemble est en outre en relation avec un dispositif activateur en fonction de l'avance de la machine pendant le travail, ce dispositif étant constitué, dans une réalisation prévue, par une roue (12) munie d'une distribution concentrique de points détectables (13), cependant que, face à cette distribution, est disposé un élément détecteur (14) de type mécanique-électrique, optique ou magnétique, capable d'engendrer des impulsions d'actionnement au moment du passage des points (13) devant lui. Dans la roue (12) mentionnée, est agencé un variateur de tours qui permet d'établir une distance déterminée entre les trous de plantation, par exemple entre 6 cm et 2 mètres, avec possibilité de réglage des écartements en millimètres ; de sorte que la réalisation des trous peut de même être prédéterminée, soit dans un même alignement dans les différents rangs, soit en quinconce, en permettant ainsi de répartir les plants sur le terrain de la façon qui convient le mieux dans chaque cas.

Tout ceci étant disposé de cette façon, lorsque la machine avance dans l'action du travail, il se produit à intervalles périodiques l'actionnement des systèmes pneumatique et hydraulique, en donnant lieu au fonctionnement des éléments (5) de la façon suivante :

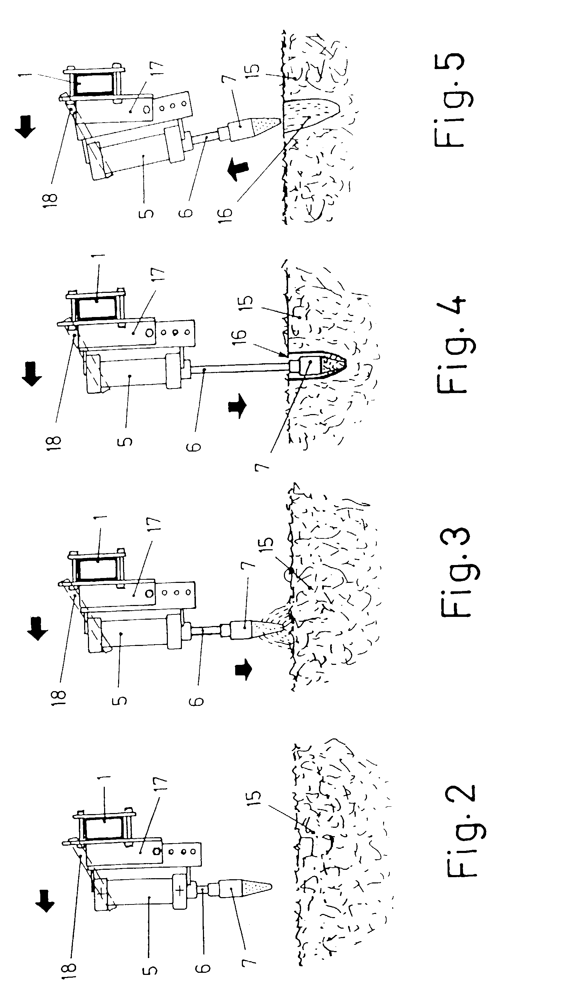

En partant d'une position rétractée, telle que celle représentée sur la figure 2, lorsque le cylindre correspondant est actionné, il se produit la sortie de la tige (6) respective vers le bas. Pendant cette descente de la tige (6), et avant que le plantoir (7) parvienne à s'introduire dans la terre (15), le système hydraulique entre en fonctionnement à son tour, en produisant un envoi d'eau, qui sort à travers le plantoir mentionné (7), comme on l'observe sur la figure 3.

Ensuite, se produit l'enfoncement du plantoir (7) dans la terre (15), comme on l'observe sur la figure 4, sans que l'éventuelle existence d'une matière plastique recouvrante ne soit un obstacle à cet enfoncement, puisque le plantoir (7) peut la traverser sans difficulté ; de sorte qu'on a réalisé un trou (16), lequel reste lorsque le plantoir (7) se retire pendant le retrait consécutif de la tige (6) vers l'intérieur du cylindre, comme on peut l'apprécier sur la figure 5.

Le trou (16) qui est ainsi réalisé, est en outre muni de l'humidification nécessaire pour que les plants en question s'enracinent et prennent puisque, pendant l'introduction du plantoir (7) la projection de l'eau à travers ce dernier se poursuit sans interruption, et on obtient que grâce à cette projection, les sorties ne sont pas obturées par la terre, étant prévu à cet effet que la projection d'eau commence, comme on l'a dit plus haut, avant que le plantoir (7) ne commence à entrer dans la terre (15) et qu'elle cesse à un moment où le plantoir (7) mentionné se trouve déjà à l'extérieur du trou (16) pendant le retrait.

L'extension et le retrait des cylindres des éléments (5) pour la réalisation des trous (16) se produit en outre en une action rapide, qui se mesure en dixièmes de seconde, c'est-à-dire d'une façon quasi instantanée, de sorte qu'on évite que le trou (16) réalisé ne soit agrandi par suite de l'avance de la machine pendant sa formation.

En outre, pour que cet agrandissement ne se produise si peu que ce soit dans le court espace de temps que dure le retrait du plantoir (7) jusqu'à ce qu'il soit dégagé du trou (16), le cylindre correspondant des éléments (5) mentionnés est agencé dans un montage basculant par rapport au support respectif de montage (17), ce qui lui permet de prendre une position inclinée selon l'avance, jusqu'à ce que le plantoir (7) sorte du trou (16), comme on l'observe sur la figure 5, en reprenant ensuite la position verticale de lui-même, prise par gravité, bien que, pour plus de sécurité, on prévoie l'agencement d'un élément élastique (18) qui coopère dans le sens de la reprise de la verticalité.

Le support (17) de chacun des éléments (5) est prévu d'autre part dans une disposition de montage par rapport au bâti structural (1), qui est telle que sa position sur la longueur dudit bâti (1) puisse être modifiée, de sorte que la largeur entre les rangs de plantation est éventuellement réglable.

Il est prévu que les sièges (4) prévus pour les ouvriers planteurs, qui sont disposés dans une distribution en quinconce selon une réalisation préférée, les uns plus avancés que d'autres dans le sens d'avance de la machine, soient eux aussi réglables en position, en hauteur et en situation sur le bâti (1), lesdits sièges (4) étant disposés en orientation vers la partie arrière de la machine, ce qui facilite le travail que les ouvriers ont à exécuter pour introduire les plants dans les trous (16) réalisés par les éléments (5) avec l'écartement déterminé par l'activation produite en fonction de la rotation de la roue (12).

Les conduites d'alimentation pneumatiques des cylindres des éléments perforateurs (5), de même que les conduits respectifs d'arrivée de l'eau jusqu'aux plantoirs (7), sont équipés de robinets respectifs (19), qui permettent de fermer les conduits nécessaires, pour permettre d'utiliser dans chaque cas les éléments (5) voulus choisis dans l'ensemble de ceux dont la machine dispose. Chaque élément (5) est en outre équipé d'une électrovanne de commande indépendante respective, qui permet la commande individualisée de chacun de ces éléments pour le déroulement de sa fonction.

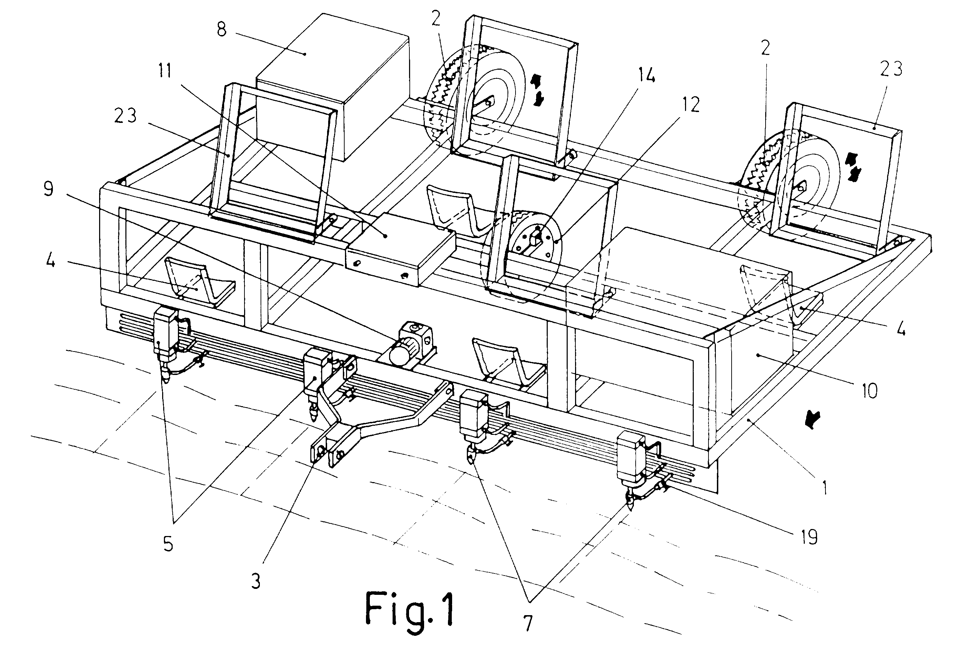

De cette façon, la machine peut être d'une conception simple, possédant une capacité prévue pour un nombre réduit d'ouvriers comme, par exemple, la réalisation de la figure 1, auquel cas les roues de déplacement (2) peuvent être fixes, de manière que le sens de la marche pour la translation coïncide avec le sens du travail, seul le positionnement en hauteur desdites roues (2) étant réglable, puisque, pour le travail, la machine doit être placée dans une position basse, proche de la terre (15), tandis que, pour le transport, il est commode qu'elle soit placée à une hauteur plus élevée.

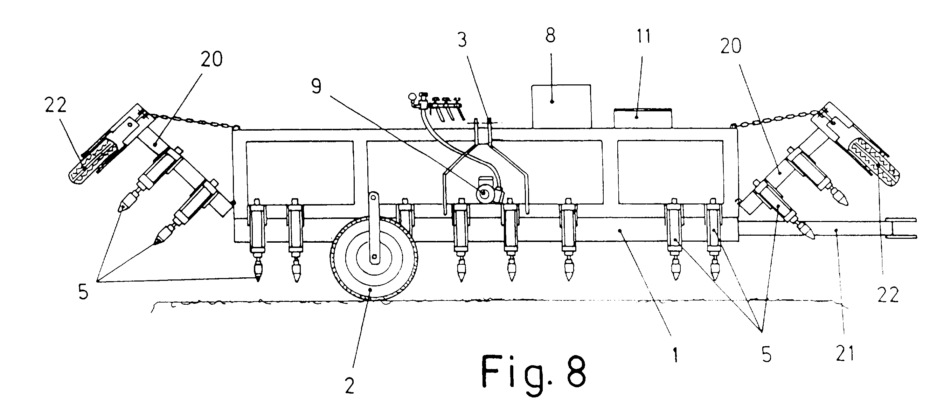

Toutefois, selon une forme de réalisation possible, telle que celle représentée sur la figure 8, la machine peut aussi posséder une capacité pour un plus grand nombre d'ouvriers, dans une adaptation qui peut aussi comporter des compléments extrêmes (20) disposés en montage basculant, pour pouvoir être relevés dans la position de transport et être rabattus pour être alignés avec le bâti (1) dans la position de travail.

Dans cette dernière forme de réalisation, grâce à la grande longueur de la machine dans le sens de la distribution des éléments perforateurs (5), les roues de transport (2) comportent un montage permettant le déplacement dans le sens longitudinal et il est alors prévu un timon démontable (21) pour l'attelage et l'entraînement de transport dans ce sens, les roues (2) mentionnées étant dans ce cas, selon une disposition démontable, de sorte qu'elles peuvent être désaccouplées de cette position de transport pour se monter dans d'autres accouplements de montage situés dans un sens perpendiculaire, ces accouplements laissant l'ensemble structural placé à une plus faible hauteur, pour le déplacement de travail dans un sens transversal, par entraînement à partir d'un attelage respectifs (3) prévu sur le côté, les compléments extrêmes (20) pouvant être équipés de roues respectives (22) prévues pour l'appui dans la position de travail.

Les éléments perforateurs (5) sont prévus dans chaque cas de façon à pouvoir être agencés dans leur montage sur les supports respectifs (17) à une hauteur variable, ce qui permet de fixer d'une façon sélective la profondeur de pénétration des plantoirs (7) dans la terre (15) en fonction de la plantation à réaliser, ces éléments pouvant de même être prévus dans une relation fonctionnelle pour que les cylindres correspondants agissent tous à la fois ou, en variante, les uns à un instant et les autres à un autre instant, selon les intervalles souhaités.

Dans chaque cas, l'eau du système hydraulique parvient aux plantoirs (7) avec la pression qui est fournie par la moto-pompe (9), tandis que le système pneumatique est muni d'un stockage de la pression dans son réservoir avec lequel on établit la communication aux moments nécessaires pour l'actionnement de chacun des cylindres des éléments perforateurs (5) ; cependant qu'on prévoit une forme de réalisation possible, dans laquelle on tire parti de la structure tubulaire du bâti (1) pour cette fonction de stockage de la pression pneumatique.

Devant chaque siège (4) est disposé éventuellement un plateau incliné (23) sur lequel on peut placer en appui les cagettes contenant les plants qu'il s'agit de repiquer dans la terre (15), et il en résulte que, de cette façon, la tâche des ouvriers est commode et simple, et ils peuvent exécuter en position assise, avec les plants à leur portée dans leurs cagettes dans lesquelles ils sont conditionnés en godets, sans avoir à se déplacer sauf pour le remplacement des cagettes sur les plateaux (23) lorsque leur contenu est épuisé.

Selon une forme de réalisation destinée à obtenir une totale autonomie, y compris dans les plantations très étendues, sans qu'il soit nécessaire de prévoir des réserves pour l'approvisionnement des plants, on prévoit, comme accessoire complémentaire, des cages ou claies (25) dans lesquelles on peut loger un certain nombre de cagettes garnies de plants en nombre suffisant pour une plantation quelconque ; lesdites cages (25) pouvant former une partie structurale complémentaire de la machine ou pouvant encore être transportées, en tant qu'accessoire indépendant, par le tracteur d'entraînement correspondant (24) lorsque la machine n'est pas auto-motrice ; cependant que, dans chaque cas, la disposition de ces cages (25) est prévue de manière qu'elles soient facilement accessibles aux ouvriers pour prendre les cagettes garnies de plants lorsqu'ils en ont besoin.

## Revendications

1. Machine à planter pour plantes potagères et analogues formée d'un châssis ou bâti structural (1) muni de roues (2) d'appui pour le déplacement, qui peuvent être réglables en hauteur, caractérisée en ce que, sur ledit bâti (1), sont montés une série de sièges (4) au droit desquels sont disposés, sur le bord frontal avant, des éléments respectifs (5), formés d'un cylindre pneumatique placé verticalement muni d'un plantoir (7) à l'extrémité de la tige respective (6), en saillie et dirigé vers le bas, lesdits éléments (5) étant en liaison avec un moyen pneumatique d'actionnement des cylindres, tandis que les plantoirs (7) sont en liaison avec un moyen de projection d'eau à travers ces plantoirs.

2. Machine à planter pour plantes potagères et analogues selon la revendication 1, caractérisée en ce que chaque élément (5) est agencé en montage sur un support correspondant (17), lesdits éléments (5) étant disposés selon une fixation articulée qui leur permet de basculer au pas de l'avance de la machine pour la réalisation des perforations engendrant les trous (16) destinés à l'insertion des plants, avec agencement d'un élément élastique (18) qui coopère pour la reprise de la position verticale.

3. Machine à planter pour plantes potagères et analogues selon les revendications 1 et 2, caractérisée en ce que les supports (17) des éléments perforateurs (5) sont agencés dans un montage qui leur permet de se déplacer horizontalement sur le bâti (1), avec possibilité de faire varier l'écartement entre les rangées de plantation.

4. Machine à planter pour plantes potagères et analogues selon les revendications 1 à 3, caractérisée en ce que les éléments perforateurs (5) sont agencés sur les supports correspondants (17) avec possibilité de positionnement sélectif en hauteur, de sorte qu'on peut établir par cet emplacement une profondeur variable des perforations dans la terre (15).

5. Machine à planter pour plantes potagères et analogues selon la revendication 1, caractérisée en ce que l'ensemble fonctionnel est équipé d'un dispositif d'activation des moyens pneumatiques et hydrauliques, constitué par une roue (12) qui tourne avec l'avance de la machine pendant le travail, et par un élément (13) capable de détecter une série de points (13) prévus circonférentiellement sur la roue (12) mentionnée.

6. Machine à planter pour plantes potagères et analogues selon la revendication 1, caractérisée en ce que selon une réalisation, on prévoit de tirer parti de la propre structure tubulaire du bâti (1) pour les fonctions de réservoir de stockage de pression pour l'actionnement pneumatique des cylindres des éléments perforateurs (5).

7. Machine à planter pour plantes potagères et analogues selon la revendication 1, caractérisée en ce que le bâti structural (1) peut être complété par des segments extrêmes (20), agencés de manière à pouvoir être basculés entre une position de transport relevée et une autre position de travail, horizontale, dans lesquels segments (20) peuvent être de même agencés des éléments perforateurs (5) et des sièges (4) correspondants ; étant prévu dans ce cas que le déplacement de transport de l'ensemble s'effectue dans un sens longitudinal et le déplacement de travail dans le sens transversal, les roues de déplacement (2) se disposant à cet effet avec possibilité d'agencement interchangeable entre les accouplements respectifs de montage pour l'un ou l'autre cas.

8. Machine à planter pour plantes potagères et analogues selon la revendication 1, caractérisée en ce que, devant chaque siège (4), est disposé un plateau (23) destiné à donner appui aux cagettes contenant les plants qui doivent être saisis pour la plantation.
